# EUROPÄISCHE PATENTSCHRIFT

(11) **EP 3 025 476 B1**
(45) Veröffentlichungstag und Bekanntmachung des Hinweises auf die Patenterteilung: **15.11.2017**
(21) Anmeldenummer: 14752584.4
(22) Anmeldetag: 05.08.2014
(51) Int. Cl.: G06F 21/62, H04W 4/00, H04L 29/06

(54) **ANPASSEN VON ZUGRIFFSREGELN FÜR EINEN DATENAUSTAUSCH ZWISCHEN EINEM ERSTEN NETZWERK UND EINEM ZWEITEN NETZWERK**
ADAPTATION OF ACCESS RULES FOR INTERCHANGING DATA BETWEEN A FIRST NETWORK AND A SECOND NETWORK
ADAPTATION DE RÈGLES D'ACCÈS POUR UN ÉCHANGE DE DONNÉES ENTRE UN PREMIER RÉSEAU ET UN SECOND RÉSEAU

(30) Priorität: 26.09.2013 DE 102013219375
(43) Veröffentlichungstag der Anmeldung: 01.06.2016
(73) Patentinhaber: Siemens Aktiengesellschaft, 80333 München (DE)
(72) Erfinder: FALK, Rainer, 85586 Poing (DE); FISCHER, Kai, 85598 Baldham (DE); FRIES, Steffen, 85598 Baldham (DE)
(86) Internationale Anmeldenummer: PCT/EP2014/066814
(87) Internationale Veröffentlichungsnummer: WO 2015/043807

(56) Entgegenhaltungen:
- US-A1- 2007 143 629
- US-A1- 2011 179 477

## Beschreibung

Die Erfindung betrifft ein Verfahren zum Anpassen von Zugriffsregeln für einen Datenaustausch zwischen einem ersten Netzwerk und einem zweiten Netzwerk durch das zweite Netzwerk aufgrund einer dienstspezifischen Integritätsinformation des ersten Netzwerks und ein System zum Bereitstellen einer dienstspezifischen Integritätsinformation eines ersten Netzwerkes.

Die Erbringung von Service-Dienstleistungen erfordert oftmals das Zusammenwirken von verschiedenen Service-Anbietern. Man spricht dabei von einer sogenannten Service Oriented Architecture. Beispielsweise erfordert die verbreitete Nutzung von Cloud-Services das Zusammenwirken von einem Endkunden mit einem Cloud-Service-Provider. Zwischen beiden Partnern existieren dabei vertragliche Beziehungen, die den Dienst beschreiben. Ferner kann beispielsweise der Cloud-Service-Provider wiederum einen Teil der erbrachten Dienstleistung an weitere Dienstanbieter auslagern. Auch hierbei sind vertragliche Absicherungen zwischen den Dienstanbietern nötig. Ein Beispiel aus dem Automatisierungsbereich ist ein Smart Metering Verfahren, bei welchem ein Smart Meter Device wie beispielsweise ein Stromverbrauchszähler einem Meter Data Operator zugeordnet ist. Dieser ist wiederum mit einem Energieversorger verbunden, um die Verbrauchsdaten zur Verrechnung zur Verfügung zu stellen.

Für eine solche Diensterbringung spielt die Integrität beteiligter Geräte eine entscheidende Rolle, da durch beabsichtigte oder unbeabsichtigte Veränderungen oder Manipulation die Qualität des Dienstes beeinträchtigt oder die Diensterbringung gestört werden kann.

Aus dem Stand der Technik sind Netzwerkzugangskontrollen bekannt, bei welchen Informationen über eine aktuelle Konfiguration eines Systems geprüft werden, bevor ein Netzwerkzugang freigeschaltet wird. Dabei werden Endgeräte während der Authentifizierung auf Richtlinienkonformität mit Richtlinien eines Netzwerks geprüft.

Zudem ist US 2011/179477 A1 bekannt, das ein konventionelles Verfahren offenbart, indem eine Zielapplikation eines Gerätes mittels eines Trust-Monitors überwacht wird. Zudem ist eine Zugriffskontrolle für die Zielapplikation realisiert.

Es ist ferner bekannt, eine Geräteattestierung, eine sogenannte Device Attestation, bereitzustellen, welche Systemeigenschaften einer Komponente gegenüber Dritten durch ein Trusted Platform Module, kurz TPM, zusichert. Dabei erstellt ein Hardware Security integrierter Schaltkreis eine kryptographisch geschützte Konfigurationsinformation über die ausgeführte Software einer Komponente.

Bei den bekannten Ansätzen wird die Integrität eines einzelnen Gerätes geschützt beziehungsweise eine Integritätsinformation eines einzelnen Gerätes bestätigt. Bei einer serviceorientierten Architektur ist diese Information jedoch nicht semantisch aussagekräftig. Ein Service, das bedeutet die Realisierung eines bestimmten Service-Interfaces, kann auf mehreren unterschiedlichen Geräten realisiert sein. Ein Service kann selbst andere Services aufrufen, die wiederum auf unterschiedlichen Hardwaregeräten realisiert sein können.

Ein Service-Anbieter wird im Allgemeinen Interna über sein Rechenzentrum vor der Preisgabe an Kunden oder Geschäftspartner schützen wollen. Eine Information über einzelne Geräte oder Komponenten eines Service-Anbieters gilt es daher zu vermeiden.

Der vorliegenden Erfindung liegt daher die Aufgabe zugrunde, ein Verfahren und ein System bereitzustellen, welche eine gesicherte Integritätsaussage über einen Dienst eines ersten Netzwerkes bereitstellen können.

Diese Aufgabe wird erfindungsgemäß durch ein Verfahren und ein System gemäß den in den unabhängigen Ansprüchen angegebenen Merkmalen gelöst. Weitere vorteilhafte Ausgestaltungen und Weiterbildungen der Erfindung sind in den abhängigen Ansprüchen angegeben.

Es wird ein Verfahren zum Anpassen von Zugriffsregeln für einen Datenaustausch zwischen einem ersten Netzwerk und einem zweiten Netzwerk durch das zweite Netzwerk aufgrund einer dienstspezifischen Integritätsinformation des ersten Netzwerkes vorgeschlagen, wobei durch das erste Netzwerk Daten verarbeitet werden, zum Ausführen eines Dienstes und durch den Dienst zumindest eine Anzahl von Komponenten definiert wird, aufweisend folgende Schritte:
Übermitteln eines jeweiligen Integritätsstatus der Anzahl von Komponenten durch die jeweilige Komponente über eine Kommunikationsverbindung innerhalb des ersten Netzwerkes an eine Verwaltungseinheit des ersten Netzwerkes;
Berechnen der dienstspezifischen Integritätsinformation in Abhängigkeit von dem oder den jeweiligen Integritätsstatus durch die Verwaltungseinheit;
Übermitteln der dienstspezifischen Integritätsinformation durch einen Netzwerkzugangspunkt des ersten Netzwerkes an einen Empfänger des zweiten Netzwerkes zum Anpassen der Zugriffsregeln, wobei ein Zugriff des Empfängers auf den oder die jeweiligen Integritätsstatus verhindert wird

Unter dem ersten Netzwerk und/oder dem zweiten Netzwerk wird beispielsweise eine jeweilige Domäne verstanden, welche jeweils separat und unabhängig von der anderen Domäne administrierbar ist. Beispielsweise umfasst eine Domäne ein Rechenzentrum und Komponenten wie Server oder Hardwarekomponenten. Es kann auch von einer Netzwerkdomäne oder einer jeweiligen administrativ getrennten Netzwerkzone gesprochen werden.

Durch das erste Netzwerk wird ein Dienst ausgeführt. Bei dem Dienst kann es sich insbesondere um einen von dem zweiten Netzwerk ausgelagerten Bearbeitungsschritt von Daten handeln. Das zweite Netzwerk möchte diesen Dienst beispielsweise aufgrund fehlender Ressourcen von einem externen Netzwerk oder einer externen Domäne bearbeiten lassen. Das erste Netzwerk ist dann ein Service-Anbieter, beispielsweise im Umfeld eines Cross Domain Services.

Die Kommunikationsverbindung innerhalb des ersten Netzwerkes kann drahtlos oder drahtgebunden realisiert sein.

Unter einer Verwaltungseinheit wird in der vorliegenden Anmeldung insbesondere eine Einheit verstanden, welche zentral Zugriff auf einen jeweiligen Integritätsstatus einer jeweiligen Komponente des ersten Netzwerkes hat. Eine solche Verwaltungseinheit wird auch Inventory Management System genannt. Das zentrale Inventory Management wird dazu genutzt, den Integritätszustand einzelner Systeme innerhalb des ersten Netzwerkes oder der ersten Domäne zu erfassen. Die Verwaltungseinheit hat ferner Informationen über die Zugehörigkeit der Komponenten zu Diensten oder Services.

Zur Ermittlung des jeweiligen Integritätsstatus kann die Verwaltungseinheit ferner je Komponente Kriterien für eine Prüfung festlegen. So können beispielsweise durch die Verwaltungseinheit Informationen einer Komponente oder eines Gerätes bezüglich des Softwareversionsstandes, bezüglich installierter Virenpattern oder ähnlicher Sicherheitsrelevanter Parameter abgefragt werden. Auf einer Komponente, beispielsweise einem Endgerät, vorhandene Einrichtungen zur gesicherten Bereitstellung von Systemeigenschaften, wie beispielsweise ein Trusted Platform Module, können von der Verwaltungseinheit genutzt werden, um die Prüfung der Integrität eines einzelnen Gerätes auf dieses Gerät auszulagern. Die Verwaltungseinheit fragt insbesondere den jeweiligen Integritätsstatus bei den Komponenten an, welche die Verwaltungseinheit als zu dem Dienst gehörig erkennt.

Von dem Empfänger des zweiten Netzwerkes aus ist ein Zugriff auf den Integritätsstatus einer Komponente des ersten Netzwerkes nicht möglich. Dabei kann insbesondere eine Kommunikationsverbindung von außerhalb des ersten Netzwerkes direkt zu einer Komponente nicht vorgesehen sein. Ferner können lediglich interne Informationen, wie beispielsweise über die Integrität einzelner Geräte, nicht direkt an externe Kommunikationspartner außerhalb des ersten Netzwerkes weitergegeben werden.

Somit muss ein Service-Anbieter oder Dienst-Anbieter interne Informationen seines eigenen Systems nicht offenlegen. Ferner ist es für das zweite Netzwerk, welches den Dienst des ersten Netzwerkes in Anspruch nehmen möchte, vorteilhaft, sich eine dienstspezifische Integritätsinformation im ersten Netzwerk bereitstellen zu lassen. Insbesondere ist auf dem zweiten Netzwerk nicht die vollständige Information verfügbar, welche Geräte oder Server innerhalb des ersten Netzwerkes zur Ausführung des Dienstes benötigt werden. Ein Service kann dabei auf mehreren unterschiedlichen Geräten realisiert sein oder ferner selbst andere Services aufrufen, welche auf unterschiedlichen Hardware-Geräten realisiert sind oder auf unterschiedliche Server zugreifen.

Empfängt der Empfänger des zweiten Netzwerkes die dienstspezifische Integritätsinformation und soll ein Annehmen von Daten aus dem ersten Netzwerk aufgrund einer Integritätsinformation, die das erste Netzwerk als nicht vertrauenswürdig einstuft, nicht zugelassen werden, so werden beispielsweise Filterregeln im zweiten Netzwerk angepasst oder verschärft. Beispielsweise kann die Kommunikation zweier unterschiedlicher IP-Adressbereiche jeweils über ein Gateway gesteuert werden, welches zusätzlich die Funktion einer Firewall hat. Die entsprechenden Maßnahmen als Reaktion auf die Integritätsinformation werden dann durch eine Konfigurationseinstellung der Firewall umgesetzt. Es liegt dazu eine Zuordnung von empfangenen Integritätsinformationen zu Filtervorschriften der Firewall vor.

Gemäß einer vorteilhaften Ausgestaltung werden durch die dienstspezifische Integritätsinformation ein Dienstidentifizierer, ein Domänenidentifizierer, eine Integritätsprüfvorschrift und/oder ein Zeitstempel bereitgestellt.

Dadurch ist eine eindeutige Zuordnung der dienstspezifischen Integritätsinformation zu dem Dienst oder zu der Domäne, welche den Dienst ausführt, gewährleistet. Eine Integritätsprüfvorschrift kann ferner angeben, auf welche Art oder nach welcher Policy oder Vorschrift die dienstspezifische Integritätsinformation ermittelt wurde. Dabei können insbesondere die Kriterien angegeben sein, welche der Prüfung der Komponente bei Ermittlung des jeweiligen Integritätsstatus zugrunde liegen. Ein Zeitstempel kann ferner eine Aktualität der dienstspezifischen Integritätsinformation sicherstellen.

Gemäß einer vorteilhaften Ausgestaltung wird durch die dienstspezifische Integritätsinformation eine Liste oder eine Verknüpfung zu einer Liste der Anzahl der Komponenten bereitgestellt.

Wird die Verknüpfung oder der Link auf eine Geräteliste angegeben, so kann diese Liste zentral zur Verfügung gestellt werden. Die Liste kann ähnlich einer Zertifikatssperrliste oder einer weißen Liste oder white list oder positiven Liste aufgebaut sein. Es kann neben den Komponentennamen auch der jeweilige Integritätsstatus oder ein wertungsloses direktes oder unbearbeitetes Ergebnis der Prüfung der jeweiligen Komponente enthalten sein. Die dienstspezifische Integritätsinformation kann über den Netzwerkzugangspunkt, beispielsweise im Rahmen von TLS oder Transportschichtsicherheit als Verschlüsselungsprotokoll übertragen werden. Die Liste der Komponenten kann über einen weiteren Zugangspunkt bereitgestellt werden, beispielsweise über einen Web-Server, dessen zugehöriger Link in der dienstspezifischen Integritätsinformation enthalten ist.

Gemäß einer Ausgestaltung wird die Integritätsinformation durch einen Wert aus einer Menge von mindestens zwei Werten dargestellt.

Es können beispielsweise zwei Klassen vorgesehen sein, oder zwei Kategorien, wobei die erste Kategorie für einen intakten oder integeren oder nicht verdächtigen Zustand des ersten Netzwerkes oder der für den Dienst benötigten Komponenten des ersten Netzwerkes steht. Eine zweite Kategorie stellt dann einen nicht vertrauenswürdigen Zustand dar. Über eine binäre Darstellung mit 0 oder 1 kann dann die entsprechende Kategorie als dienstspezifische Integritätsinformation bereitgestellt werden.

Ferner können feingranularere Kategorien vorgesehen sein, welche beispielsweise dem Empfänger detailliertere Informationen zur Verfügung stellen, beispielsweise über den Zustand einzelner Komponenten. Somit kann auf vorteilhafte Weise das zweite Netzwerk Zugriffsregeln anpassen. Somit können unterschiedliche Maßnahmen in Abhängigkeit von der dienstspezifischen Integritätsinformation eingeleitet werden. Es kann so die Inanspruchnahme des Dienstes vollständig verweigert werden, wenn eine negative Integritätsinformation an das zweite Netzwerk übermittelt wird. Bei Bereitstellung einer detaillierten Analyse kann das zweite Netzwerk einen Dienst beispielsweise teilweise durch das erste Netzwerk durchführen lassen. Dabei können beispielsweise nur unkritische Daten an das erste Netzwerk übermittelt werden. Ferner können von dem ersten Netzwerk lediglich Daten, welche für sicherheitsunkritische Anwendungen innerhalb des zweiten Netzwerkes verwendet werden, dem zweiten Netzwerk zur Verfügung gestellt werden.

Gemäß einer Ausgestaltung wird das zweite Netzwerk durch eine von dem ersten Netzwerk abweichende zweite Verwaltungseinheit administriert.

Es kann sich somit bei den beiden Netzwerken um vergleichbare Systeme handeln. Insbesondere kann die Systemintegrität beider Netzwerke als Domänen zweier Diensterbringer sichergestellt werden, indem das vorgestellte Verfahren aus Sicht beider Domänen durchgeführt wird. Dabei können neben der Integrität der Geräte der Domäne auch andere charakteristische System- oder Diensteigenschaften einbezogen werden, wie beispielsweise eine aktuelle Auslastung von Servern oder eine verfügbare Netzbandbreite.

Gemäß einer Ausführungsform wird die Anzahl von Komponenten in Form von Recheneinheiten, umfassend einen Prozessor zur Ausführung des Dienstes innerhalb des ersten Netzwerkes ausgebildet.

Damit können durch das erste Netzwerk eine Vielzahl von Diensten realisiert werden. Mehrere Recheneinheiten oder Untersysteme innerhalb des ersten Netzwerkes können vorteilhaft für die schnelle Ausführung eines Dienstes herangezogen werden.

Gemäß einer Ausführungsform wird die Datenübertragung zwischen der Anzahl von Komponenten und einem Teilnehmer außerhalb des ersten Netzwerkes über einen Netzwerkzugangspunkt ausgeführt, wobei der Netzwerkzugangspunkt die Datenübertragung beschränkt.

Somit sind die Komponenten für einen Teilnehmer außerhalb des ersten Netzwerkes nicht direkt ansprechbar. Die Kommunikation zwischen dem ersten Netzwerk und dem zweiten Netzwerk wird damit über den Netzwerkzugangspunkt oder Domänenzugangspunkt oder Servicezugangspunkt, auch Domain Access Point oder Service Access Point genannt, geleitet. Damit kann die Datenübertragung zu Zwecken der Ausführung des Dienstes sichergestellt werden, falls die Integrität des Dienstes bestätigt wird. Gleichzeitig werden die einzelnen Integritätsstatus der Komponenten vor Zugriff von außerhalb des Netzwerkes geschützt.

Gemäß einer vorteilhaften Weiterbildung wird die dienstspezifische Integritätsinformation im Rahmen eines Authentifizierungszertifikates übermittelt.

Im Rahmen des Authentisierens des ersten Netzwerkes gegenüber dem zweiten Netzwerk kann so auch die dienstspezifische Integritätsinformation übermittelt werden. Beispielsweise wird das Authentifizierungszertifikat mit einer Kennung der Domäne und einem von einer Zertifizierungsinstanz ausgestellten öffentlichen Schlüssel gemeinsam mit der Integritätsinformation übermittelt. Zur Sicherstellung der Vertraulichkeit, Authentizität und Integrität der mit dem Authentisierungszertifikat übermittelten Daten enthält das Authentisierungszertifikat eine digitale Signatur, deren Echtheit mit dem öffentlichen Schlüssel des Zertifikatausstellers durch den Empfänger geprüft werden kann.

Gemäß einer Ausführungsform wird die dienstspezifische Integritätsinformation mit Hilfe eines Attributzertifikates an ein Authentisierungszertifikat gebunden.

Das Attributzertifikat enthält dann unter anderem die dienstspezifische Integritätsinformation und verweist auf das zugehörige Authentisierungszertifikat. Auch hier wird durch eine vertrauenswürdige Instanz mittels einer elektronischen Signatur die Bindung zwischen der Integritätsinformation und dem Authentisierungszertifikat und damit einem Sender des ersten Netzwerkes bestätigt.

Das Authentisierungszertifikat wird dabei auf Seiten des Empfängers mit Hilfe des öffentlichen Schlüssels des Zertifikatausstellers überprüft. Das Entkoppeln der Integritätsinformation von dem Authentisierungszertifikat vereinfacht das Bereitstellen der Integritätsinformation, da das Authentisierungszertifikat nicht bei jedem Bereitstellen neu generiert werden muss. Dies erlaubt eine dynamische Zuordnung von Zusicherungen über den angefragten Integritätszustand oder sogenannten Integrity Attestations zu den Authentisierungszertifikaten.

Die vertrauenswürdige Instanz oder Zertifizierungsstelle des Attributzertifikates kann ferner von der des Authentisierungszertifikates abweichen.

Gemäß einer Weiterbildung wird durch das erste Netzwerk eine Attestierung der dienstspezifischen Integritätsinformation erstellt, in Abhängigkeit von kryptographischem Schlüsselmaterial.

Dabei kann insbesondere die Verwaltungseinheit des ersten Netzwerkes eine Attestierung oder Attestation zur Verfügung stellen über den erreichten Security-Status des ersten Netzwerkes oder der ersten Domäne oder der Kombination von Komponenten, die für den Dienst benötigt werden. Als kryptographisches Schlüsselmaterial kann insbesondere bei asymmetrischen Verschlüsselungsverfahren ein privater Schlüssel oder private key des Inventory Management Systems verwendet werden oder ein symmetrischer Schlüssel, der ein gemeinsamen Geheimnis zwischen erstem Netzwerk und zweiten Netzwerk darstellt.

Gemäß einer Ausgestaltung wird die Attestierung durch eine kryptographische Prüfsumme der Verwaltungseinheit gebildet.

Damit fungiert die Verwaltungseinheit, beispielsweise das Inventory Management des ersten Netzwerkes, als vertrauenswürdige, Zertifikat ausstellende Komponente. Die kryptographische Prüfsumme schützt die Attestierung vor Manipulation. Die kryptographische Prüfsumme kann eine digitale Signatur wie beispielsweise eine RSA-Signatur, eine DSA-Signatur oder eine EC-DSA-Signatur oder ein Authentisierungscode wie ein Message Authentication Code, z.B. AES-CBC-MAC, HMAC-SHA256 sein.

Gemäß einer Weiterbildung wird die Attestierung durch den Empfänger ausgewertet.

Auf Seiten des zweiten Netzwerkes kann insbesondere eine Signaturprüfung durchgeführt werden mit Hilfe des öffentlichen Schlüssels der Verwaltungseinheit des ersten Netzwerkes. Dies sichert die Integrität der Integritätsinformation und die Authentizität des Senders des ersten Netzwerkes. Ferner können Auswertungen bezüglich der Aktualität der Integritätsinformation oder der Attestierung über die Integritätsinformation durchgeführt werden.

Gemäß einer Weiterbildung wird die Attestierung in Abhängigkeit von einem Merkmal des zweiten Netzwerkes erstellt.

Die Integritätsbestätigung kann dann dynamisch auf Anfrage des zweiten Netzwerkes in dem ersten Netzwerk generiert werden. Insbesondere kann ein Zeitpunkt einer Anfrage mit in die Attestierung mit aufgenommen werden, sodass eine Aktualität oder Freshness der Attestierung gewährleistest werden kann. Das zweite Netzwerk liefert dadurch ein Merkmal in der Anfrage mit, welches das erste Netzwerk bei der Generierung einbindet.

Die Erfindung betrifft ferner ein System zum Bereitstellen einer dienstspezifische Integritätsinformation eines ersten Netzwerkes, wobei durch das erste Netzwerk die Daten verarbeitbar sind zum Ausführen eines Dienstes und durch den Dienst zumindest eine Anzahl von Komponenten definierbar ist, umfassend
die Anzahl von Komponenten zum Übermitteln eines jeweiligen Integritätsstatus der Anzahl von Komponenten über eine Kommunikationsverbindung innerhalb des ersten Netzwerkes an eine Verwaltungseinheit des ersten Netzwerkes;
die Verwaltungseinheit zum Berechnen der dienstspezifischen Integritätsinformation in Abhängigkeit von dem oder den jeweiligen Integritätsstatus;
einen Netzwerkzugangspunkt des ersten Netzwerkes zum Bereitstellen der dienstspezifischen Integritätsinformation an einen Empfänger zum Anpassen einer Berechtigung, wobei ein Zugriff des Empfängers auf den oder die jeweiligen Integritätsstatus verhinderbar ist.

Gemäß einer Ausgestaltung umfasst das System ferner eine Attestierungseinheit zum Erstellen einer Attestierung in Abhängigkeit von der dienstspezifischen Integritätsinformation mit Hilfe von kryptographischem Schlüsselmaterial.

Gemäß einer Weiterbildung weist das System ferner eine Verbindung zu einer Attestierungseinheit oder Zertifizierungsinstanz zur Durchführung der oben beschriebenen Verfahrensschritte auf.

Die Erfindung wird anhand von Ausführungsbeispielen mit Hilfe der Figuren näher erläutert.

Es zeigen:

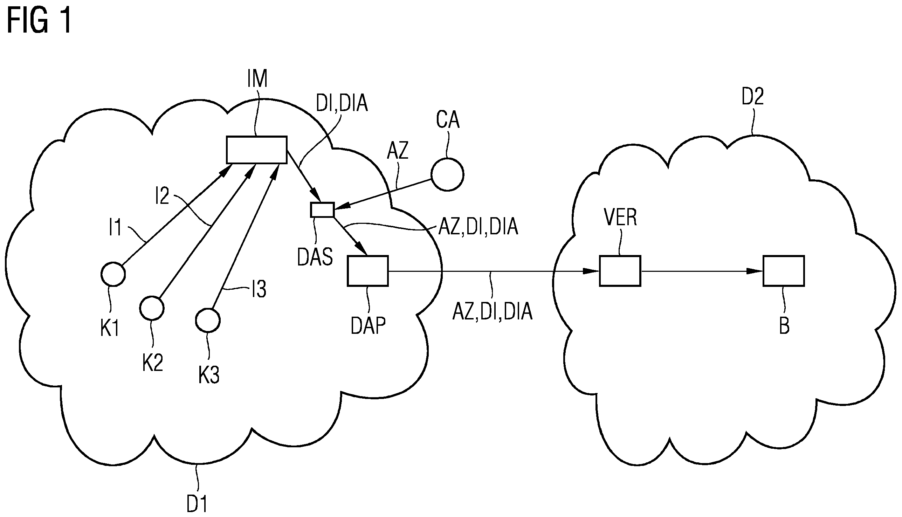

- Figur 1: eine schematische Darstellung eines Systems zur Durchführung des Verfahrens gemäß einem ersten Ausführungsbeispiel der Erfindung;

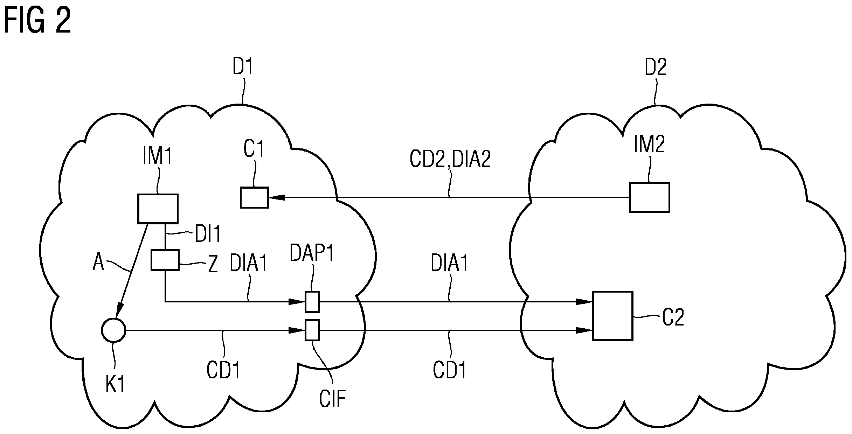

- Figur 2: eine schematische Darstellung eines Systems aus ersten Netzwerk und zweitem Netzwerk zur jeweiligen Durchführung des Verfahrens gemäß einem zweiten Ausführungsbeispiel der Erfindung.

Gemäß einem ersten Ausführungsbeispiel der Erfindung soll innerhalb eines zweiten Netzwerkes D2 ein Prozessschritt B innerhalb einer Automatisierungsanlage durchgeführt werden, wenn je nach Prozessschritt B unterschiedlich ausfallende Randbedingungen vorliegen. Die Randbedingungen können dabei durch umgebungsspezifische und variable Daten gebildet werden. Informationen über diese Randbedingungen werden mittels eines Diensterbringers eingeholt. Bei dem Diensterbringer handelt es sich um ein erstes Netzwerk D1, welches zur Ausführung des Dienstes mehrere Komponenten K1, K2, K3 beinhaltet.

Der Prozessschritt B soll ferner nur dann ausgeführt werden, wenn zusätzlich zu den Informationen auch eine Attestierung DIA oder Assertion vorliegt, die einen Integritätszustand DI der Komponenten oder der Kombination aus Komponenten bestätigt, die am Dienst beteiligt sind, d.h. wenn die Informationen, die über die Integrität der Dienstkomponenten bereitgestellt werden, um eine Attestierung DIA über die dienstspezifische Integritätsinformation DI erweitert sind. Bei den Randbedingungen, die für den Prozessschritt B relevant sind, kann es sich um historische oder aktuelle Daten oder Prognosewerte handeln.

Soll beispielsweise ein materialverarbeitender Schritt nur bei Gewährleistung einer konstanten Umgebungstemperatur oder dem Schwanken innerhalb eines festgelegten Temperaturbereichs durchgeführt werden, so muss eine gesicherte Temperaturprognose innerhalb der Anlage vorliegen. Dafür nimmt das zweite Netzwerk D2 einen Service des ersten Netzwerkes D1 zur Bereitstellung von Temperaturwerten und Temperaturdiagnosen in Anspruch. Dieser Service wird durch das erste Netzwerk D1 unter Einbeziehung der Komponenten K1, K2, K3 realisiert. Eine erste Komponente K1 ist dabei beispielsweise ein erster Sensor, der innerhalb der Anlage verbaut ist. Eine zweite Komponente K2 ist ein externer Sensor und eine dritte Komponente K3 ist ein Server, welcher von einer externen Wetterstation Wetterprognosewerte abfragen kann und diese dem ersten Netzwerk D1 zur Verfügung stellt.

Eine Verwaltungseinheit IM innerhalb des ersten Netzwerkes D1 ist als Inventory Management System ausgestaltet. Sie sammelt insbesondere Informationen über einzelne Integritätsstatus I1, I2, I3 der Komponenten K1, K2, K3. Ferner leitet sie daraus für jeden Dienst, den das erste Netzwerk D1 zur Verfügung stellt, eine dienstspezifische Integritätsinformation DI her. Dadurch ermittelt die Verwaltungseinheit IM einen Security-Status des ersten Netzwerkes D1. Vorteilhafterweise werden die Prüfungen der Komponenten K1, K2, K3 in regelmäßigen Abständen angestoßen, indem die Verwaltungseinheit IM regelmäßig den Integritätsstatus I1, I2, I3 der Komponenten K1, K2, K3 anfragt. So ist immer ein aktueller Security-Status für die verschiedenen Dienste, die insbesondere auf unterschiedliche Server zugreifen und daher einen voneinander abweichenden Status aufweisen können, verfügbar.

Wird durch das zweite Netzwerk D2 der Dienst zum Bereitstellen der Temperaturprognose angefordert, so stellt ein Netzwerkzugangspunkt DAP, auch Domain Access Point genannt, des ersten Netzwerkes D1 eine Anfrage bezüglich einer dienstspezifischen Integritätsinformation DI an die Verwaltungseinheit. Das bedeutet, der Netzwerkzugangspunkt DAP fordert eine Aussage über den Zustand bezüglich der Integrität derjenigen Komponenten an, welche für die Ausführung des Dienstes eingesetzt werden. Die Verwaltungseinheit IM kann in Abhängigkeit von einer angefragten Aussage den aktuellen jeweiligen Integritätsstatus I1, I2, I3 der jeweiligen Komponente K1, K2, K3 ermitteln.

Die Verwaltungseinheit IM stellt daraufhin dem Netzwerkzugangspunkt DAP eine Attestierung DIA über den dienstspezifischen Integritätszustand DI oder eine so genannte Domain Integrity Assertion aus.

Die Überprüfung von Servern, auf welche der Dienst zugreift, oder Geräten aus Subnetzen, welche nur teilweise Zugriff auf das erste Netzwerk D1 haben oder andersherum, kann beispielsweise über die Verwendung eines Network Access Control Verfahrens regelmäßig angestoßen werden. Damit liegen der Verwaltungseinheit IM jederzeit aktuelle Aussagen über den Integritätszustand der Server vor. Neben einer Angabe über den Integritätsstatus I3 eines für den Dienst benötigten Servers kann ferner zusätzlich die Integrität eines Management Systems des Servers mit einbezogen werden, um eine höhere Dienstgüte sicherzustellen.

Die Verwaltungseinheit IM ermittelt die dienstspezifische Integritätsinformation DI in der Funktion eines Domain Integrity Compliance Management. Die Domain Integrity Assertion, welche eine durch das Inventory Management digital signierte dienstspezifische Integritätsinformation DI ist, wird dann einem Domain Access Server DAS zur Verfügung gestellt. Dieser kann die Domain Integrity Assertion direkt nutzen oder auf Anfrage Dritter weitergeben. Wird die Assertion direkt benutzt, kann sie insbesondere als Teil des Authentisierungszertifikates AZ des Domain Access Servers DAS im Authentisierungsverfahren zwischen dem ersten Netzwerk D1 und dem zweiten Netzwerk D2 übertragen werden. Das Authentisierungszertifikates AZ wird von einer Zertifizierungsinstanz CA ausgestellt.

Die Assertion kann ferner als Teil eines Sicherheitsprotokolls wie beispielsweise Internet Protokoll Security, kurz IPSec, oder Transport Layer Security, kurz TLS, übertragen werden.

Auf Seiten des zweiten Netzwerkes D2 wird die Assertion durch einen Empfänger VER validiert, beispielsweise über eine Signaturprüfung, eine Aktualitätsprüfung oder eine Zuordnung zu einer Domäne, identifiziert über den IP-Adressraum oder eine Domain-Name-System-Namensbereich.

Zusätzlich kann der Domain Access Point eine Liste mit zu dem Dienst gehörenden Komponenten K1, K2, K3 und deren jeweiligen Integritätsstatus I1, I2, I3 zur Verfügung stellen. Damit wird neben dem Bewertungsergebnis des Inventory Management Systems, das eine reine ja/nein-Aussage bezüglich der Integrität sein kann, zusätzlich eine detailliertere Auflistung übertragen. Dies erhöht die Transparenz für einen Nutzer des Dienstes und kann insbesondere Aufschluss geben, falls eine nicht vollständig positive Integritätsattestierung bereitgestellt wird.

Es kann in Abhängigkeit von der bereitgestellten Attestierung DIA ein Service freigegeben werden. Dies erfolgt im Sinne logischer Und-Verknüpfungen von Berechtigungen. Bei Bereitstellung einer maximal positiven Attestierung DIA wird dann von einer vollständigen Integrität aller beteiligten Komponenten ausgegangen und ein Zugriff freigegeben, welcher alle möglichen Berechtigungen mit einer logischen Und-Funktion verknüpft.

Wird durch die übermittelte Integritätsinformation DI oder Attestierung DIA allerdings ein schlechterer Security-Status der diensterbringenden Domäne angenommen, so werden die Berechtigungen eingeschränkt, das heißt beispielsweise nur einige Schritte des Services in Anspruch genommen.

Wird im beschriebenen Beispiel eine Attestierung DIA ausgestellt, welche eine vollständige Integrität der internen und externen Sensoren bestätigt, allerdings den Integritätsstatus des Servers zur Ermittlung der Temperaturprognosedaten nicht als vertrauenswürdig einstuft, so kann das zweite Netzwerk D2, insbesondere ein Steuerungssystem der Automatisierungsanlage, durch den Dienst bereitgestellte Daten nur teilweise akzeptieren. Zur Steuerung der Anlage können dann die Temperaturdaten der Sensoren verwendet werden, wohingegen zur Ermittlung der Temperaturprognosedaten auf einen Dienst eines anderen Diensterbringers zurückgegriffen wird.

Ferner ermöglicht ein System gemäß einem zweiten Ausführungsbeispiel der Erfindung eine sichere Diensterbringung beim Einsatz von Cross Domain Services. Domänenübergreifender Informationsaustausch stellt insbesondere die Basis für viele industrielle Smart-Szenarien wie beispielsweise Smart Grid, Smart City oder Smart Factory dar. Dabei werden speziell Betriebsdaten einer Domäne einer anderen Domäne bereitgestellt. Die involvierten Domänen liegen dabei unter unterschiedlicher administrativer Kontrolle. Die ausgetauschten Daten werden beispielsweise zur Überwachung und Steuerung durch ein Steuerungssystem einer der Domänen verwendet.

In einem solchen Umfeld ist insbesondere der gegenseitige Nachweis eines ausreichenden Integritätsstatus vorteilhaft.

In einem zweiten Ausführungsbeispiel ist daher das erste Netzwerk D1 mit einer ersten Verwaltungseinheit IM1 oder auch ersten Inventory Management System und das zweite Netzwerk D2 mit einer zweiten Verwaltungseinheit IM2 oder einem zweiten Inventory Management System ausgestattet und das oben beschriebene Verfahren oder eine Ausführungsform davon wird sowohl aus Sicht des zweiten Netzwerkes D2 mit dem ersten Netzwerk D1 als Diensterbringer als auch aus Sicht des ersten Netzwerks D1 mit dem zweiten Netzwerk D2 als Diensterbringer durchgeführt.

So können beispielsweise jeweilige empfangene Steuerbefehle CD1, CD2 durch jeweilige Steuerungskomponenten C1, C2 der jeweiligen Domäne abhängig von einer jeweiligen übermittelten Attestierung DIA1, DIA2 über den Security-Status der die Steuerbefehle sendenden Domäne akzeptiert werden.

Die erste Verwaltungseinheit IM1 stellt insbesondere eine erste dienstspezifische Integritätsinformation DI1 aus und leitet diese an eine Attestierungseinheit Z weiter. Diese erstellt eine Signatur zu der ersten dienstspezifischen Integritätsinformation DI1 und stellt die signierte Integritätsinformation als erste Attestierung DIA1 einem ersten Netzwerkzugangspunkt DAP1 zur Verfügung. Der erste Netzwerkzugangspunkt DAP1 stellt dem zweiten Netzwerk D2 die erste Attestierung DIA1 bereit und übermittelt außerdem über eine erste Datenkommunikationsschnittstelle CIF1 einen ersten Steuerbefehl CD1 an die zweite Steuerungskomponente C2.

Beispielsweise kann eine professionell betriebene Domäne weitreichendere Aktionen im Netzwerk der anfragenden Domäne durchführen als eine weniger professionell betriebene Domäne.

Es kann ferner die Durchführung des Dienstes beispielsweise in dem ersten Netzwerk D1 in Abhängigkeit von dem bereitgestellten Integritätszustand des Netzwerkes D2 gestartet werden. Damit kann die diensterbringende Domäne, d.h. hier das erste Netzwerk D1, sicherstellen, dass die Daten, die als Ergebnis des Dienstes an das zweite Netzwerk D2 bereitgestellt werden, nicht an eine Domäne bereitgestellt werden, dessen Integritätszustand selbst schlecht ist. Dies kann insbesondere denkbar sein im Falle von Übermittlung kritischer Daten, beispielsweise personenbezogener Daten oder von Schlüsselmaterial.

Innerhalb von Industrieanlagen kann für Safety-kritische Anwendungen die Information aus der Attestierung DIA über den Verlust der Integrität auf einem Teilsystem dazu führen, dass Redundanzsysteme oder auch alternative Serviceanbieter genutzt werden. Bei Erkennen eines Integritätsabfalls kann ferner durch die erste Verwaltungseinheit IM1 der dienstanfordernden Domäne ein Alarmsignal A an eine Komponenten K1 des ersten Netzwerkes D1 gesendet werden.

Im dem Fall, dass der Dienst durch ein einzelnes Gerät erbracht wird, d.h. beispielsweise das erste Netzwerk durch dieses eine Gerät gebildet wird, wird die Attestierung über den Integritätszustand dieses einen Gerätes vorteilhafterweise direkt bei der Authentifizierung dieses Gerätes angehängt. Dies ist insbesondere bei einer Remote-Administrierung sinnvoll. Die Attestierung kann dann auch von der Remote Domäne angefordert werden, beispielsweise bei einem Zugriff über einen lokalen Domain Service Point.

Ferner kann für den Fall, dass sich ein Diensterbringer, z.B. ein Remote-Service im ersten Netzwerk, mit einem Gerät in dem zweiten Netzwerk verbindet, dieses Gerät im zweiten Netzwerk sicherstellen, dass der administrative Zugriff durch den Remote-Service nur dann erfolgt, wenn der Integritätsstatus des Diensterbringers gut ist. Falls der Remote Service Techniker einen Rechner anschließt, auf dem kein aktueller Patch-Stand ist, so kann das Gerät im zweiten Netzwerk die Remote-Service Anfrage ablehnen, da der Integritätsstatus nicht ausreichend ist und damit potentielle Gefahren bei der Ausführung des Dienstes aus Sicht des zweiten Netzwerkes bestehen.

Ferner kann ein Diensterbringer gegenüber einem Kunden die Einhaltung einer Dienstgütevereinbarung oder eines Service Level Agreements nachweisen.

Die jeweiligen Komponenten und die Verwaltungseinheit können hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Komponente und Verwaltungseinheit als Computerprogrammprodukt, als eine Funktion, als eine Routine, als Teil eines Programmcodes oder als ausführbares Objekt ausgebildet sein.

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Anpassen von Zugriffsregeln für einen Datenaustausch zwischen einem ersten Netzwerk (D1) und einem zweiten Netzwerk (D2) durch das zweite Netzwerk (D2) aufgrund einer dienstspezifischen Integritätsinformation (DI) des ersten Netzwerkes (D1), wobei durch das erste Netzwerk (D1) Daten verarbeitet werden zum Ausführen eines Dienstes und durch den Dienst zumindest eine Anzahl von Komponenten (K1, K2, K3) definiert wird, aufweisend folgende Schritte:
- Übermitteln eines jeweiligen Integritätsstatus (I1, I2, I3) der Anzahl von Komponenten (K1, K2, K3) durch die jeweilige Komponente (K1, K2, K3) über eine Kommunikationsverbindung innerhalb des ersten Netzwerkes (D1) an eine Verwaltungseinheit (IM) des ersten Netzwerkes (D1), wobei
- die Komponenten (K1, K2, K3) Hardwarekomponenten sind,
- die Komponenten (K1, K2, K3) mehrere Komponenten (K1, K2, K3) sind;
- Berechnen der dienstspezifischen Integritätsinformation (DI) in Abhängigkeit von den jeweiligen Integritätsstatus (I1, I2, I3) durch die Verwaltungseinheit (IM);
- Übermitteln der dienstspezifischen Integritätsinformation (DI) durch einen Netzwerkzugangspunkt (DAP) des ersten Netzwerkes (D1) an einen Empfänger (VER) des zweiten Netzwerkes (D2) zum Anpassen der Zugriffsregeln, wobei ein Zugriff des Empfängers (VER) auf die jeweiligen Integritätsstatus (I1, I2; I3) verhindert wird.

2. Verfahren nach Anspruch 1, wobei durch die dienstspezifische Integritätsinformation (DI) ein Dienstidentifizierer, ein Domänenidentifizierer, eine Integritätsprüfvorschrift und/ oder ein Zeitstempel bereitgestellt werden.

3. Verfahren nach Anspruch 1 oder 2, wobei durch die dienstspezifische Integritätsinformation (DI) eine Liste oder eine Verknüpfung zu einer Liste der Anzahl der Komponenten (K1, K2, K3) bereitgestellt wird.

4. Verfahren nach einem der vorstehenden Ansprüche, wobei die Integritätsinformation (DI) durch einen Wert aus einer Menge von mindestens zwei Werten dargestellt wird.

5. Verfahren nach einem der vorstehenden Ansprüche, wobei das zweite Netzwerk (D2) durch eine von dem ersten Netzwerk (D1) abweichende zweite Verwaltungseinheit (IM2) administriert wird.

6. Verfahren nach einem der vorstehenden Ansprüche, wobei die Anzahl von Komponenten (K1, K2, K3) in Form von Recheneinheiten umfassend einen Prozessor zur Ausführung des Dienstes innerhalb des ersten Netzwerkes (D1) ausgebildet wird.

7. Verfahren nach einem der vorstehenden Ansprüche, wobei eine Datenübertragung zwischen der Anzahl von Komponenten (K1, K2, K3) und einem Teilnehmer außerhalb des ersten Netzwerkes (D1) über einen Netzwerkzugangspunkt (DAP) ausgeführt wird, wobei der Netzwerkzugangspunkt (DAP) die Datenübertragung beschränkt.

8. Verfahren nach einem der vorstehenden Ansprüche, wobei die dienstspezifische Integritätsinformation (DI) im Rahmen eines Authentisierungszertifikates übermittelt wird.

9. Verfahren nach einem der vorstehenden Ansprüche, wobei die dienstspezifische Integritätsinformation (DI) mit Hilfe eines Attributzertifikates an ein Authentisierungszertifikat gebunden wird.

10. Verfahren nach einem der vorstehenden Ansprüche, wobei durch das erste Netzwerk (D1) eine Attestierung (DIA) der dienstspezifischen Integritätsinformation (DI) erstellt wird in Abhängigkeit von kryptographischem Schlüsselmaterial.

11. Verfahren nach Anspruch 10, wobei die Attestierung (DIA) durch eine kryptographische Prüfsumme der Verwaltungseinheit (IM) gebildet wird.

12. Verfahren nach Anspruch 10 oder 11, wobei die Attestierung (DIA) durch den Empfänger (VER) ausgewertet wird.

13. Verfahren nach einem der Ansprüche 10 bis 12, wobei die Attestierung (DIA) in Abhängigkeit von einem Merkmal des zweiten Netzwerkes (D2) erstellt wird.

14. System zum Bereitstellen einer dienstspezifischen Integritätsinformation (DI) eines ersten Netzwerkes (D1), wobei durch das erste Netzwerk (D1) Daten verarbeitbar sind zum Ausführen eines Dienstes und durch den Dienst zumindest eine Anzahl von Komponenten (K1, K2, K3) definiert wird, umfassend:
- die Anzahl von Komponenten (K1, K2, K3) zum Übermitteln eines jeweiligen Integritätsstatus (I1, I2, I3) der Anzahl von Komponenten (K1, K2, K3) über eine Kommunikationsverbindung innerhalb des ersten Netzwerkes (D1) an eine Verwaltungseinheit (IM) des ersten Netzwerkes (D1)
wobei
- die Komponenten (K1, K2, K3) Hardwarekomponenten sind,
- die Komponenten (K1, K2, K3) mehrere Komponenten sind;
- die Verwaltungseinheit (IM) zum Berechnen der dienstspezifischen Integritätsinformation (DI) in Abhängigkeit von den jeweiligen Integritätsstatus (I1, I2, I3);
- einen Netzwerkzugangspunkt (DAP) des ersten Netzwerkes (D1) zum Bereitstellen der dienstspezifischen Integritätsinformation (DI) an einen Empfänger (VER) zum Anpassen einer Berechtigung, wobei ein Zugriff des Empfängers (VER) auf die jeweiligen Integritätsstatus (I1, I2, I3) verhindert wird.

15. System nach Anspruch 14, ferner umfassend eine Attestierungseinheit (Z) zum Erstellen einer Attestierung (DIA) in Abhängigkeit von der dienstspezifischen Integritätsinformation (DI) mit Hilfe von kryptographischem Schlüsselmaterial.

16. System nach Anspruch 14 oder 15, ferner umfassend eine Zertifizierungsinstanz (CA) zur Durchführung der Schritte gemäß einem der Ansprüche 8 bis 9.

## Claims

1. Method for adapting access rules for a data interchange between a first network (D1) and a second network (D2) by the second network (D2) on the basis of a service-specific integrity information item (DI) of the first network (D1), wherein the first network (D1) processes data for carrying out a service and the service defines at least one number of components (K1, K2, K3), having the following steps:
- transmission of a respective integrity status (I1, 12, I3) for the number of components (K1, K2, K3) by the respective component (K1, K2, K3) via a communication link within the first network (D1) to a management unit (IM) of the first network (D1), wherein
- the components (K1, K2, K3) are hardware components,
- the components (K1, K2, K3) are a plurality of components;
- computation of the service-specific integrity information item (D1) on the basis of the respective integrity statuses (I1, I2, I3) by the management unit (IM) ;
- transmission of the service-specific integrity information item (DI) by a network access point (DAP) of the first network (D1) to a receiver (VER) in the second network (D2) for adapting the access rules, wherein access by the receiver (VER) to the respective integrity statuses (I1, I2; I3) is prevented.

2. Method according to Claim 1, wherein the service-specific integrity information item (DI) provides a service identifier, a domain identifier, an integrity checking code and/or a time stamp.

3. Method according to Claim 1 or 2, wherein the service-specific integrity information item (DI) provides a list or a link to a list of the number of the components (K1, K2, K3).

4. Method according to one of the preceding claims, wherein the integrity information item (DI) is represented by a value comprising a set of at least two values.

5. Method according to one of the preceding claims, wherein the second network (D2) is administrated by a second management unit (IM2), which is different than the first network (D1).

6. Method according to one of the preceding claims, wherein the number of components (K1, K2, K3) is produced in the form of computation units comprising a processor for carrying out the service within the first network (D1).

7. Method according to one of the preceding claims, wherein a data transmission between the number of components (K1, K2, K3) and a subscriber outside the first network (D1) is carried out via a network access point (DAP), wherein the network access point (DAP) limits the data transmission.

8. Method according to one of the preceding claims, wherein the service-specific integrity information item (DI) is transmitted as part of an authentication certificate.

9. Method according to one of the preceding claims, wherein the service-specific integrity information item (DI) is tied to an authentication certificate by means of an attribute certificate.

10. Method according to one of the preceding claims, wherein the first network (D1) produces an attestation (DIA) for the service-specific integrity information item (DI) on the basis of cryptographic key material.

11. Method according to Claim 10, wherein the attestation (DIA) is formed by a cryptographic checksum of the management unit (IM).

12. Method according to Claim 10 or 11, wherein the attestation (DIA) is evaluated by the receiver (VER).

13. Method according to one of Claims 10 to 12, wherein the attestation (DIA) is produced on the basis of a feature of the second network (D2).

14. System for providing a service-specific integrity information item (DI) of a first network (D1), wherein the first network (D1) can process data for carrying out a service and the service can define at least one number of components (K1, K2, K3), comprising:
- the number of components (K1, K2, K3) for transmitting a respective integrity status (I1, I2, I3) of the number of components (K1, K2, K3) via a communication link in the first network (D1) to a management unit (IM) in the first network (D1), wherein
- the components (K1, K2, K3) are hardware components,
- the components (K1, K2, K3) are a plurality of components;
- the management unit (IM) for computing the service-specific integrity information item (DI) on the basis of the respective integrity statuses (I1, 12, 13);
- a network access point (DAP) of the first network (D1) for providing the service-specific integrity information item (DI) for a receiver (VER) for adapting an authorization, wherein access by the receiver (VER) to the respective integrity statuses (I1, I2, I3) is prevented.

15. System according to Claim 14, additionally comprising an attestation unit (Z) for producing an attestation (DIA) on the basis of the service-specific integrity information item (DI) by means of cryptographic key material.

16. System according to Claim 14 or 15, additionally comprising a certification entity (CA) for performing the steps according to either of Claims 8 and 9.

## Revendications

1. Procédé d'adaptation de règles d'accès pour un échange de données entre un premier réseau (D1) et un deuxième réseau (D2) par le deuxième réseau (D2) sur la base d'une information d'intégrité spécifique à un service (DI) du premier réseau (D1), le premier réseau (D1) traitant des données pour l'exécution d'un service et le service définissant au moins un nombre de composants (K1, K2, K3), comportant les étapes suivantes :
- transmission d'un statut d'intégrité respectif (I1, I2, I3) du nombre de composants (K1, K2, K3) par le composant respectif (K1, K2, K3) via une liaison de communication dans le premier réseau (D1) à une unité de gestion (IM) du premier réseau (D1),
- les composants (K1, K2, K3) étant des composants hardware,
- les composants (K1, K2, K3) étant plusieurs composants (K1, K2, K3) ;
- calcul de l'information d'intégrité spécifique à un service (DI) en fonction des statuts d'intégrité respectifs (I1, I2, I3) par l'unité de gestion (IM);
- transmission de l'information d'intégrité spécifique à un service (DI) par un point d'accès au réseau (DAP) du premier réseau (D1) à un récepteur (VER) du deuxième réseau (D2) pour adapter les règles d'accès, un accès du récepteur (VER) aux statuts d'intégrité respectifs (I1, I2; I3) étant empêché.

2. Procédé selon la revendication 1, l'information d'intégrité spécifique à un service (DI) fournissant un identifiant de service, un identifiant de domaine, une règle de contrôle de l'intégrité et/ou un horodateur.

3. Procédé selon la revendication 1 ou 2, l'information d'intégrité spécifique à un service (DI) fournissant une liste ou un lien vers une liste du nombre de composants (K1, K2, K3).

4. Procédé selon l'une des revendications précédentes, l'information d'intégrité (DI) étant représentée par une valeur tirée d'un ensemble d'au moins deux valeurs.

5. Procédé selon l'une des revendications précédentes, le deuxième réseau (D2) étant administré par une deuxième unité de gestion (IM2) différente du premier réseau (D1).

6. Procédé selon l'une des revendications précédentes, le nombre de composants (K1, K2, K3) étant réalisé sous la forme d'unités de calcul comprenant un processeur pour exécuter le service dans le premier réseau (D1).

7. Procédé selon l'une des revendications précédentes, une transmission de données étant exécutée entre le nombre de composants (K1, K2, K3) et un usager en dehors du premier réseau (D1) via un point d'accès au réseau (DAP), le point d'accès au réseau (DAP) limitant la transmission de données.

8. Procédé selon l'une des revendications précédentes, l'information d'intégrité spécifique à un service (DI) étant transmise dans le cadre d'un certificat d'authentification.

9. Procédé selon l'une des revendications précédentes, l'information d'intégrité spécifique à un service (DI) étant liée à un certificat d'authentification à l'aide d'un certificat d'attribut.

10. Procédé selon l'une des revendications précédentes, le premier réseau (D1) établissant une attestation (DIA) de l'information d'intégrité spécifique à un service (DI) en fonction d'un matériel de clé cryptographique.

11. Procédé selon la revendication 10, l'attestation (DIA) étant formée par une somme de contrôle cryptographique de l'unité de gestion (IM).

12. Procédé selon la revendication 10 ou 11, l'attestation (DIA) étant évaluée par le récepteur (VER).

13. Procédé selon l'une des revendications 10 à 12, l'attestation (DIA) étant établie en fonction d'une caractéristique du deuxième réseau (D2).

14. Système de fourniture d'une information d'intégrité spécifique à un service (DI) d'un premier réseau (D1), des données pouvant être traitées par le premier réseau (D1) pour exécuter un service et au moins un nombre de composants (K1, K2, K3) étant défini par le service, comprenant :
- le nombre de composants (K1, K2, K3) pour la transmission d'un statut d'intégrité respectif (I1, I2, I3) du nombre de composants (K1, K2, K3) via une liaison de communication dans le premier réseau (D1) à une unité de gestion (IM) du premier réseau (D1),
- les composants (K1, K2, K3) étant des composants hardware,
- les composants (K1, K2, K3) étant plusieurs composants,
- l'unité de gestion (IM) pour le calcul de l'information d'intégrité spécifique à un service (DI) en fonction des statuts d'intégrité respectifs (I1, I2, I3) ;
- un point d'accès au réseau (DAP) du premier réseau (D1) pour la fourniture de l'information d'intégrité spécifique à un service (DI) à un récepteur (VER) pour l'adaptation d'une autorisation, un accès du récepteur (VER) aux statuts d'intégrité respectifs (I1, I2, I3) étant empêché.

15. Système selon la revendication 14, comprenant en outre l'unité d'attestation (Z) pour l'établissement d'une attestation (DIA) en fonction de l'information d'intégrité spécifique à un service (DI) a l'aide d'une matière de clé cryptographique.

16. Système selon la revendication 14 ou 15, comprenant en outre une instance de certification (CA) pour exécuter les étapes selon les revendications 8 à 9.
